# EUROPEAN PATENT APPLICATION

(11) **EP 4 648 552 A1**
(43) Date of publication of application: **12.11.2025**
(21) Application number: 24843247.8
(22) Date of filing: 26.04.2024
(51) Int. Cl.: H05B 6/12, F24C 15/10, G02F 1/355, G09F 9/33, H10H 20/855, C03C 17/34, C03C 4/00

(54) **COOKING APPARATUS**

(30) Priority: 17.07.2023 KR 20230092734; 21.08.2023 KR 20230109262
(71) Applicant: Samsung Electronics Co., Ltd., Suwon-si, Gyeonggi-do 16677 (KR)
(72) Inventor: SONG, Jiyoung, Suwon-si Gyeonggi-do 16677 (KR); YOON, Jooyong, Suwon-si Gyeonggi-do 16677 (KR); CHOO, Hyunjoon, Suwon-si Gyeonggi-do 16677 (KR); HA, Jonghun, Suwon-si Gyeonggi-do 16677 (KR)
(74) Representative: Gulde & Partner
(86) International application number: PCT/KR2024/005710
(87) International publication number: WO 2025/018524

(57) **Abstract**

A cooking apparatus includes: a cooking plate; at least one induction heater below the cooking plate and configured to generate a magnetic field; and a light source configured to emit light, wherein the cooking plate may include: a glass body; a printing layer on a lower surface of the glass body, the printing layer including a hole configured to allow the light emitted from the light source to be transmitted through the hole, and a color filter layer on a lower surface of the printing layer and corresponding to the hole in a vertical direction, wherein the cooking plate is divided into a first region that corresponds to the at least one induction heater and a second region that does not correspond to the at least one induction heater, and wherein the color filter layer is located in the first region.

## Description

### [Technical Field]

The disclosure relates to a cooking apparatus with an improved structure.

### [Background Art]

A cooktop is a cooking apparatus for heating and cooking food using an induction heating principle, and includes a cooking plate on which a cooking vessel is placed and an induction heating device generating a magnetic field upon application of electric current.

Due to the magnetic field generated by the induction heating device, a secondary current is induced in the cooking vessel, and Joule heat is generated by an electrical resistance component of the cooking vessel itself. As a result, the cooking vessel is heated by a highfrequency current, and the food in the cooking vessel is cooked.

Because such cooktops use the cooking vessel itself as a heat source, the cooktops have higher heat transfer rates, no harmful gases, and no risk of fire, compared to gas stoves or kerosene stoves that burn fossil fuels and heat the cooking vessel through the heat of combustion.

### [Disclosure]

### [Technical Problem]

Provided is a cooking apparatus that may be capable of induction heating regardless of a position of a food container on a cooking plate.

Additional aspects will be set forth in part in the description which follows and, in part, will be apparent from the description, or may be learned by practice of the presented embodiments.

### [Technical Solution]

According to an aspect of the disclosure, a cooking apparatus includes: a cooking plate; at least one induction heater below the cooking plate and configured to generate a magnetic field; and a light source configured to emit light, wherein the cooking plate may include: a glass body; a printing layer on a lower surface of the glass body, the printing layer including a hole configured to allow the light emitted from the light source to be transmitted through the hole, and a color filter layer on a lower surface of the printing layer and corresponding to the hole in a vertical direction, wherein the cooking plate is divided into a first region that corresponds to the at least one induction heater and a second region that does not correspond to the at least one induction heater, and wherein the color filter layer is located in the first region.

### [Advantageous Effects]

Further provided is a cooking apparatus which may have an improved user usability due to a display displayed on a cooking plate regardless of a position of a food container on the cooking plate.

Further provided is a cooking apparatus which may have a reduced risk of breakage due to a rigidity of a cooking plate regardless of a position of a food container on the cooking plate.

### [Description of Drawings]

FIG. 1 is a perspective view illustrating an example of a cooking apparatus according to an embodiment;
FIG. 2 is an exploded view illustrating an example of a cooking apparatus according to an embodiment;
FIG. 3 is a control block diagram illustrating an example of a cooking apparatus according to an embodiment;
FIG. 4 is a view illustrating a food container placed on a cooking plate of a cooking apparatus according to an embodiment;
FIG. 5 is a view illustrating lighting in a lighting portion of a cooking plate when a food container is placed on the cooking plate of a cooking apparatus according to an embodiment;
FIG. 6 is a cross-sectional view of a cooking plate according to an embodiment;
FIG. 7 is a view illustrating a manufacturing process of a cooking plate according to an embodiment;
FIG. 8 is a view illustrating a manufacturing process of a cooking plate according to an embodiment.
FIG. 9 is a view illustrating a manufacturing process of a cooking plate according to an embodiment;
FIG. 10 is a view illustrating a manufacturing process of a cooking plate according to an embodiment;
FIG. 11 is a view illustrating a manufacturing process of a cooking plate according to an embodiment;
FIG. 12 is a view illustrating a manufacturing process of a cooking plate according to an embodiment;
FIG. 13 is a view illustrating lighting in a lighting portion when a food container is placed on a cooking plate according to an embodiment;
FIG. 14 is a view illustrating lighting in the lighting portion after FIG. 13;
FIG. 15 is a view illustrating lighting in the lighting portion after FIG. 14;
FIG. 16 is a view illustrating lighting in a lighting portion when a food container is placed on a cooking plate according to an embodiment;
FIG. 17 is a view illustrating lighting in the lighting portion after FIG. 16;
FIG. 18 is a view illustrating lighting in a lighting portion when a food container is placed on a cooking plate according to an embodiment; and
FIG. 19 is a view illustrating lighting in the lighting portion after FIG. 18.

### [Modes of the disclosure]

Embodiments described in the specification and configurations shown in the accompanying drawings are merely examples of the disclosure, and various modifications may replace the embodiments and the drawings of the disclosure at the time of filing of the application.

Like reference numerals or symbols denoted in the drawings of the specification are members or components that perform the substantially same functions.

The terms used herein are only for the purpose of describing particular embodiments and are not intended to limit to disclosure. A singular form of a noun corresponding to an item may include one item or a plurality of the items unless context clearly indicates otherwise. It will be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

An expression that one component is "connected", "coupled", "supported", or "in contact" with another component includes a case in which the components are directly "connected", "coupled", "supported", or "in contact" with each other and a case in which the components are indirectly "connected", "coupled", "supported", or "in contact" with each other through a third component.

It will also be understood that when one component is referred to as being "on" or "over" another component, it can be directly on the other component or intervening components may also be .

Although the terms "first", "second", etc. may be used to describe different components, the terms do not limit the corresponding components, but are used only for the purpose of distinguishing one component from another. For example, without departing from the technical spirit or essential features of the disclosure, a first element may be referred to as a second element, and a second element may be referred to as a first element.

As used herein, each of the expressions "A or B," "at least one of A and B," "at least one of A or B," "A, B, or C," "at least one of A, B, and C," and "at least one of A, B, or C," may include one or all possible combinations of the items listed together with a corresponding expression among the expressions.

The term "and/or" includes any and all combinations of one or more of a plurality of associated listed items.

The terms "front to rear direction," "front (forward) direction," "rear (backward) direction," "horizontal direction," "left," "right," "vertical direction," "upper," "lower," etc., used in the following description are defined based on the drawings, and the shape and position of each component are not limited by these terms. For example, +X direction may be defined as forward, and -X direction may be defined as backward. For example, +Y direction may be defined as right, and -Y direction may be defined as left. For example, +Z direction may be defined as upward, and -Z direction may be defined as downward.

Hereinafter, embodiments of the disclosure is described in detail with reference to the accompanying drawings.

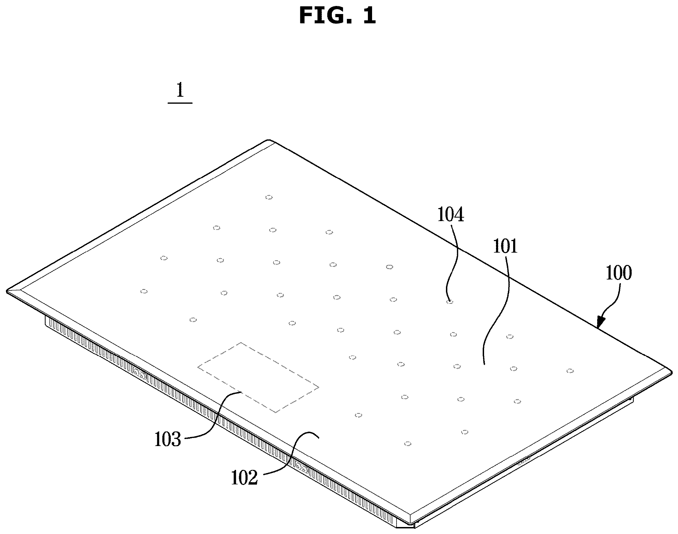

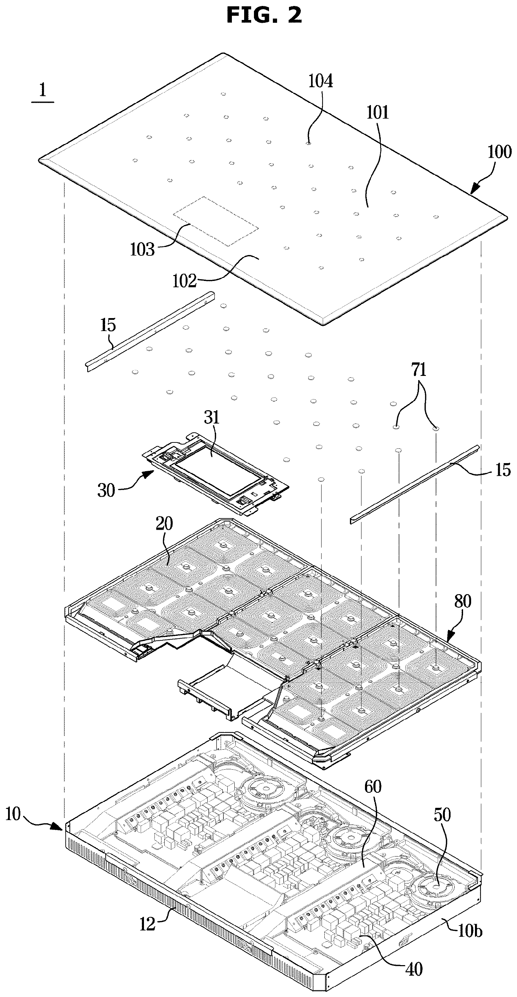

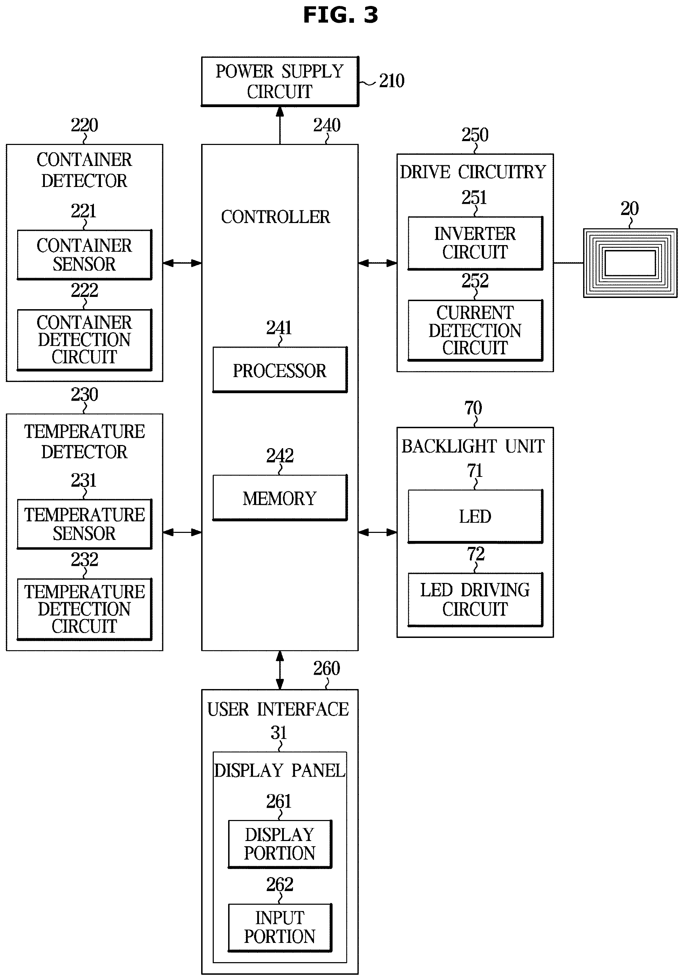

FIG. 1 is a perspective view illustrating an example of a cooking apparatus according to an embodiment. FIG. 2 is an exploded view illustrating an example of a cooking apparatus according to an embodiment. FIG. 3 is a control block diagram illustrating an example of a cooking apparatus according to an embodiment.

Referring to FIG. 1 and FIG. 2, a cooking apparatus 1 may include a housing 10. The housing 10 may accommodate various components constituting the cooking apparatus 1. The housing 10 may form an exterior of at least a portion of the cooking apparatus 1. For example, the housing 10 may include a shape with an open top. The housing 10 may be referred to as the case 10.

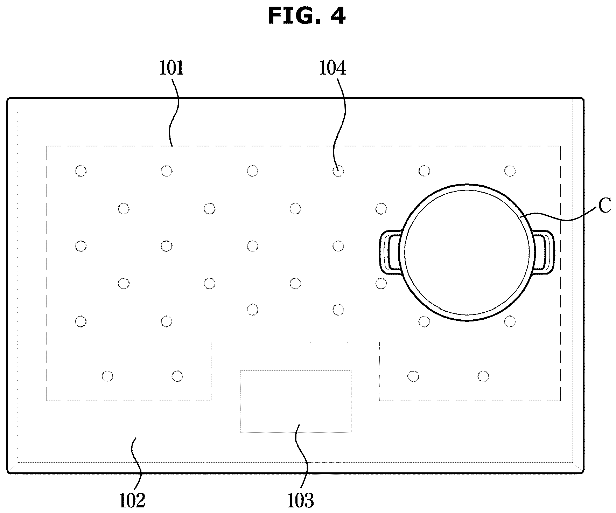

The cooking apparatus 1 may include a cooking plate 100 on which a cooking vessel (hereinafter referred to as a "food container C", see FIG. 4) may be placed. The cooking plate 100 may be coupled to an upper portion of the housing 10. For example, the cooking plate 100 may include an approximately flat plate shape. In an example, the cooking plate 100 may include tempered glass, such as ceramic glass, to resist easy breakage.

In an example, the cooking plate 100 may include a first region 101. The first region 101 may correspond to a location of at least one induction heater 20 to be described later. The first region 101 may be a region on which the food container C is placed.

In an example, the cooking plate 100 may include a second region 102. The second region 102 may be defined as a region other than the first region 101, i.e., a region that does not correspond to the location of the at least one induction heater 20 to be described later.

In an example, the cooking plate 100 may include a display portion 103 for receiving a control command from a user and displaying operation information of the cooking apparatus 1 to the user. The display portion 103 may be provided as an example of a user interface.

In an example, the display portion 103 may be a region through which a display panel 31, to be described later, is transmitted (i.e., passed through) and viewed by a user.

In an example, the display portion 103 may be formed on the second region 102.

The display portion 103 is shown as being located on a front side of the cooking plate 100, but is not limited thereto. The display portion 103 is shown as having a rectangular shape, but is not limited thereto. As long as the display portion 103 may receive a command from a user or display a state of the cooking apparatus, its location and shape are not limited.

Referring to FIG. 2, the cooking apparatus 1 may include the at least one induction heater 20 disposed below the cooking plate 100. For example, the cooking apparatus 1 may include a heating portion 80 including the at least one induction heater 20. The heating portion 80 may heat a food container C placed on the cooking plate 100. The at least one induction heater 20 may be referred to as the heating portion 80. The heating portion 80 may be referred to as the heating device 80.

In an example, the number of induction heaters 20 is not limited. In an example, the induction heater 20 may be provided as a single induction heater. In an example, two or more induction heaters 20 may be provided. In an example, a plurality of induction heaters 20 adjacent to each other may be combined to form a single heater. The number of induction heaters 20 forming a single heater is not limited. In an example, one induction heater 20 may form a single heater. In an example, two or more induction heaters 20 may form a single heater.

In an example, the induction heater 20 may include a working coil that may generate a magnetic field and/or an electromagnetic field.

The cooking apparatus 1 may include a display assembly 30 for implementing a user interface.

In an example, the display assembly 30 may include the display panel 31.

In an example, the display assembly 30 may be provided as a printed board assembly (PBA) including the display panel 31, a switching element, an integrated circuit element, and the like, and a printed circuit board (PCB) on which the aforementioned components are mounted.

In an example, the display assembly 30 may be accommodated in the housing 10.

In an example, the display panel 31 may be provided as a liquid crystal display (LCD), a light emitting diode (LED), an organic light emitting diode (OLED), or the like.

In an example, the display panel 31 may include a touch screen panel (TSP).

In an example, the display panel 31 may be disposed to correspond to the display portion 103 in a vertical direction. An image displayed on the display panel 31 may be displayed on the cooking plate 100 via the display portion 103. In an example, the display portion 103 may allow the image displayed on the display panel 31 to pass through and be displayed to a user.

The cooking apparatus 1 may include a printed board assembly (PBA 40). The PBA 40 may supply a drive current to the at least one induction heater 20. The PBA 40 may implement a circuit for operating the at least one induction heater 20. The PBA 40 may include various elements and/or circuitry for supplying a drive current to the at least one induction heater 20.

The cooking apparatus 1 may include a fan 50. The fan 50 may be arranged for heat dissipation in the housing 10. The fan 50 may reduce a temperature of the PBA 40 and/or the display assembly 30. The fan 50 may draw in external air. The fan 50 may exhaust air flowing inside the housing 10. The external air drawn into the inside of the housing 10 by the fan 50 may be exhausted to the outside of the housing 10 after cooling the inside of the housing 10.

At least one fan 50 may be provided. Although three fans 50 are shown in FIG. 2, the number of fans is not limited thereto. In an example, a single fan 50 may be provided. For example, three or more fans 50 may be arranged.

In an example, the fan 50 may be an axial flow fan or a mixed flow fan. However, the type of fan 50 is not limited thereto, as long as the fan 50 may draw air from the outside of the housing 10 and exhaust air inside the housing 10 back to the outside of the housing 10.

The housing 10 may include an outlet 12. The fan 50 may exhaust hot air in the housing 10 to the outside of the housing 10 through the outlet 12. For example, the outlet 12 may be formed on a side 10b of the housing 10. However, a location of the outlet 12 is not limited thereto, and may vary depending on a shape and arrangement of the fan 50.

The cooking apparatus 1 may include a heat sink 60. The heat sink 60 may be provided for heat dissipation in the housing 10. The heat sink 60 may reduce a temperature of the PBA 40 and/or the display assembly 30.

For example, the heat sink 60 may include a material having a high thermal conductivity. For example, the heat sink 60 may include at least one of aluminum or copper.

In an example, the cooking apparatus 1 may include a partition. The partition may be disposed between the at least one induction heater 20 and the PBA 40.

In an example, the partition may support the at least one induction heater 20. The partition may be disposed to correspond to the at least one induction heater 20.

In an example, the partition may include a material capable of magnetic shielding. In an example, the partition may block an induction magnetic field formed in the induction heater 20 from leaking into the PBA 40. Accordingly, the PBA 40 may be prevented from being affected by the induction magnetic field by the partition.

Referring to FIG. 3, the cooking apparatus 1 may include a power supply circuit 210. The power supply circuit 210 may be configured to receive an alternating current (AC) power from an external power source. The power supply circuit 210 may supply the applied AC power to a driving circuitry 250. For example, the power supply circuit 210 may be installed on the PBA 40.

The cooking apparatus 1 may include a container detector 220. The container detector 220 may detect a food container C placed on the cooking plate 100.

In an example, the container detector 220 may include a container sensor 221 for detecting a position of the food container C. The container detector 220 may include a container detection circuit 222 that processes an output of the container sensor 221 and outputs information about the position of the food container C to a controller 240.

The container sensor 221 may be disposed adjacent to the induction heater 20 to detect the food container C positioned on the induction heater 20. In an example, the container sensor 221 may be disposed on the induction heater 20. In an example, a position of the container sensor 221 is not limited as long as the container sensor 221 is capable of detecting the position of the food container C.

In an example, the container sensor 221 may include a capacitance sensor for detecting the food container C. The container sensor 221 may detect a change in capacitance caused by the food container C. In an example, the container sensor 221 may include a variety of sensors that may detect the food container C placed on the cooking plate 100, such as an infrared sensor, a weight sensor, a micro switch, a membrane switch, and the like, in addition to the capacitive sensor.

The container sensor 221 may output information about the detection of the food container C to the container detection circuit 222.

The container detection circuit 222 may receive a detection result of the food container C from the container sensor 221, and may determine the position of the food container C based on the detection result. In an example, the container detection circuit 222 may determine that the induction heater 20 at least partially corresponds to the food container C in a vertical direction. For example, the container detection circuit 222 may be installed on the PBA 40.

In an example, the container detection circuit 222 may include a multiplexer for sequentially receiving detection results from the container sensor 221. In an example, the container detection circuit 222 may include a microprocessor for processing the detection results of the container sensor 221.

The container detection circuit 222 may output container position data, obtained by processing the detection result of the container sensor 221, to the controller 240.

The controller 240 may control a user interface 260 to display the position of the food container C based on the detection result of the container detector 220. The controller 240 may control the driving circuitry 250, corresponding to an induction heater 20 that at least partially corresponds to the food container C in a vertical direction, to provide a drive current to the induction heater 20.

In an example, the controller 240 may directly determine that the induction heater 20 corresponds to the food container C. In an example, the controller 240 may determine that the induction heater 20 at least partially corresponds to the food container C in a vertical direction based on a change in inductance of the induction heater 20 caused by approach of the food container C. The controller 240 may control the driving circuitry 250 to output a detection signal for detecting the food container C to the induction heater 20 at each predetermined time. In addition, the controller 240 may control a current detection circuit 252 of the driving circuitry 250 to detect a current flowing to the induction heater 20 based on a detection signal. In an example, the cooking apparatus 1 may determine that the induction heater 20 corresponds to the food container C by measuring a frequency, phase, or the like of an alternating current flowing in the induction heater 20, in addition to the change in the inductance of the induction heater 20.

The cooking apparatus 1 may include a temperature detector 230. The temperature detector 230 may detect the food container C placed on the cooking plate 100.

The food container C may be overheated by the induction heater 20. The cooking apparatus 1 may detect a temperature of the food container C placed on the cooking plate 100, and may block operation of the induction heater 20 when the food container C is overheated. Accordingly, safety of use of the cooking apparatus 1 may be ensured.

In an example, the temperature detector 230 may include a temperature sensor 231 for detecting the temperature of the food container C. For example, the temperature detector 230 may include a temperature detection circuit 232 that processes an output of the temperature sensor 231 and outputs information about the temperature of the food container C to the controller 240.

The temperature sensor 231 may be disposed adjacent to the induction heater 20 to measure the temperature of the food container C being heated by the induction heater 20. In an example, the first temperature sensor 231 may be disposed on the induction heater 20. A location of the temperature sensor 231 is not limited thereto, as long as the temperature sensor 231 may measure a temperature of the food container C.

In an example, the temperature sensor 231 may include a thermistor which has an electrical resistance value that changes with temperature.

The temperature sensor 231 may output a signal indicative of a temperature of the food container C to the temperature detection circuit 232.

The temperature detection circuit 232 may receive the signal indicative of the temperature of the food container C from the temperature sensor 231, and may determine the temperature of the food container C from the received signal. For example, the temperature detection circuit 232 may be installed on the PBA 40.

The temperature detection circuit 232 may output temperature data, obtained by processing a detection result of the temperature sensor 231, to the controller 240.

The temperature detector 230 may detect the temperature of the food container C and output the detection result to the controller 240. The controller 240 may determine whether the food container C is overheated based on the detection result of the temperature detector 230, and may stop heating the food container C in response to the food container C being detected as overheated.

The cooking apparatus 1 may include the controller 240. The controller 240 may control the cooking apparatus 1 based on a user input. The controller 240 may control components of the cooking apparatus 1 based on a user input.

In an example, the controller 240 may include at least one processor 241 and/or at least one memory 242.

In an example, the at least one processor 241 may generate an output control signal for controlling a strength of magnetic field of the induction heater 20 based on an output level received from a user via the user interface 260.

In an example, the at least one processor 241 may determine whether the food container C is placed on the induction heater 20, based on an output value received from at least one of the container detection circuit 222 or the current detection circuit 252.

For example, the at least one processor 241 may include various logic circuits and arithmetic circuits, and may process data according to a program provided from the at least one memory 242 and generate a control signal based on the processing results.

For example, the at least one memory 242 may store a control program and control data for controlling operation of the cooking apparatus 1. In addition, the at least one memory 242 may temporarily store a user input received from the user interface 260, position data of the food container C received from the container detector 220, temperature data of the food container C received from the temperature detector 230, a current value measured by the driving circuitry 250, and the like.

In an example, the at least one memory 242 may provide a control program and/or control data to the at least one processor 241, according to the control signal of the at least one processor 241. The at least one memory 242 may provide the at least one processor 241 with a user input, position data of the food container C, and/or temperature data of the food container C, and the like.

In an example, the at least one memory 242 may include a volatile memory for temporarily storing data, such as a static random-access memory (S-RAM), a dynamic random-access memory (D-RAM), and a non-volatile memory for storing a driving program and/or driving data for a long period of time, such as a read-only memory (ROM), an erasable programmable read-only memory (EPROM), an electrically erasable programmable read-only memory (EEPROM), flash memory, and the like.

The at least one processor 241 and the at least one memory 242 may be implemented as separate integrated circuits (ICs), or may be implemented as a single IC.

The at least one processor 241 may be installed on the PBA 40. The at least one memory 242 may be installed on the PBA 40.

The cooking apparatus 1 may include the driving circuitry 250. The driving circuitry 250 may drive the at least one induction heater 20. The driving circuitry 250 may supply a drive current to the induction heater 20. The cooking apparatus 1 may be electrically connected to the induction heater 20, and may supply a drive current to the connected induction heater 20.

In an example, the number of driving circuitry 250 may be provided to correspond to the number of induction heaters 20. In an example, at least one driving circuitry 250 may be provided.

The driving circuitry 250 may be controlled by the controller 240. The driving circuitry 250 may selectively supply a drive current to the induction heater 20 in accordance with control of the controller 240. The driving circuitry 250 may receive power from an external power source, and may supply a drive current to the induction heater 20 according to a drive control signal of the controller 240. The driving circuitry 250 may supply an AC drive current to the induction heater 20 using power supplied via the power supply circuit 210 in accordance with control of the controller 240. For example, the driving circuitry 250 may be installed on the PBA 40.

The driving circuitry 250 may include an inverter circuit 251 that supplies or blocks a drive current to the induction heater 20.

In an example, the inverter circuit 251 may include at least one switching element. The inverter circuit 251 may vary a magnitude and direction of the current supplied to the induction heater 20 by controlling turn-on/turn-off of the at least one switching element in accordance with control of the controller 240.

The driving circuitry 250 may include the current detection circuit 252 that measures a current output from the inverter circuit 251. The current detection circuit 252 may detect a magnitude of the AC drive current supplied to the induction heater 20.

The current detection circuit 252 may include a variety of circuits. For example, the current detection circuit 252 may include a Hall sensor for measuring a strength of a magnetic field generated around a wire supplying current to the induction heater 20, and may calculate a magnitude of the current output from the inverter circuit 251 based on the strength of the magnetic field measured by the Hall sensor.

The cooking apparatus 1 may include a backlight unit 70. The backlight unit 70 may be provided as a light emitting diode (hereinafter, LED 71), which forms a light source to emit light. In an example, the light source may be provided as an organic light emitting diode (OLED), or the like, in addition to the LED.

The LED 71 may be disposed to correspond to a lighting portion 104 of the cooking plate 100 in a vertical direction or to be adjacent to the lighting portion 104 in order to emit light to the lighting portion 104, which will be described later.

A plurality of lighting portions 104 may be provided. The number of LEDs 71 may be provided to correspond to the number of lighting portions 104, and a plurality of LEDs 71 may be disposed at a location approximately corresponding to each of the lighting portions 104.

In an example, lighting of the cooking plate 100 may be implemented by light transmitted from the plurality of lighting portions 104. Lighting of the cooking plate 100 may vary, as light is emitted from at least one of the plurality of LEDs 71 and is transmitted from at least one lighting portion 104 corresponding to the LED 71.

In an example, the LEDs 71 may be disposed in the induction heater 20. In an example, the LEDs 71 may be disposed on the induction heaters 20. In an example, the LEDs 71 may be disposed between a plurality of induction heaters 20.

In an example, the LED 71 may include a heat-resistant material, because high temperatures may be transferred to the LEDs 71 when heat from self-heating of the induction heater 20 or the heating of the food container C is conducted.

In an example, the LED 71 may include a heat-resistant material having an approximate heat resistance temperature of 500°C or more.

The backlight unit 70 may include an LED driving circuit 72 that drives the LEDs 71 based on signals transmitted from the controller 240.

In an example, the LED 71 may be formed as a unit of three LEDs: a red LED, a blue LED, and a green LED. Accordingly, the LED 71 may emit different colors of light through a combination of R/G/B.

In an example, the LED driving circuit 72 may turn on/off an LED 71 disposed at a specific location based on a signal transmitted from the controller 240. In an example, the LED driving circuit 72 may drive the LED 71 disposed at the specific location to repeatedly turn on/off of the LED 71 for a predetermined period of time based on the signal transmitted from the controller 240. In an example, the LED driving circuit 72 may drive the LED 71 to emit a specific color of light based on the signal transmitted from the controller 240.

In an example, the controller 240 may control the backlight unit 70 to drive the LEDs 71 adjacent to the food container C based on information about a position of the food container C transmitted from the container detector 220.

In an example, the controller 240 may control the backlight unit 70 to allow the LED 71 to emit a specified color of light according to a specified temperature, based on information about the temperature of the food container C transmitted from the temperature detector 230.

The cooking apparatus 1 may include the user interface 260. The user interface 260 may receive an input from a user. The user interface 260 may display information about an operation of the cooking apparatus 1, a state of the cooking apparatus 1, various messages, and the like.

In an example, the user interface 260 may display, to a user, various information about an operational state of the cooking apparatus via the display portion 261.

In an example, the user interface 260 may include an input portion 262 that may receive various control commands from a user. In an example, the input portion 262 may be implemented as a physical button, touch button, touch pad, knob, jog shuttle, control stick, trackball, track pad, and the like.

In an example, the display portion 261 and input portion 262 of the user interface 260 may be implemented via the display panel 31. The display panel 31 may be implemented as a touch screen panel (TSP) on which images may be displayed and inputs may be made.

The cooking apparatus 1 may further include a communicator, which is wired or wirelessly connected to a network to perform communication with other electronic devices, servers, and the like. In an example, information input from a user may be received from various mobile terminal devices via the communication portion and the received information may be collected in the controller 240. Based on the collected information, the controller 240 may control driving of the induction heater 20, and may display information such as images on the display.

Hereinafter, the cooking plate 100 is described in more detail.

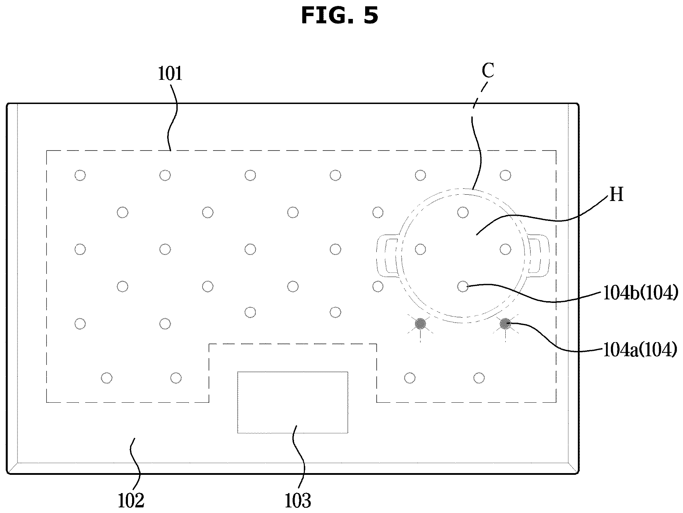

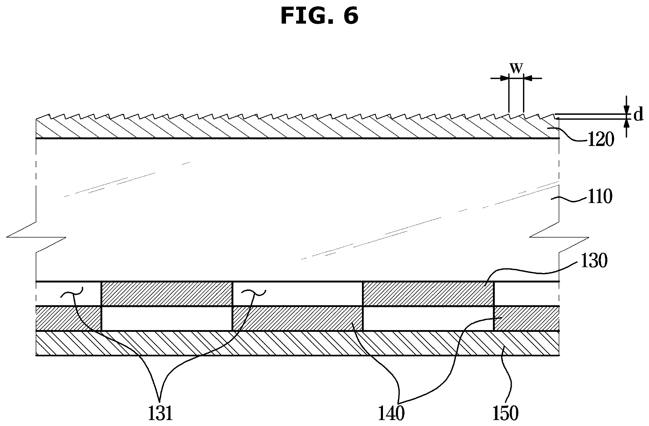

FIG. 4 is a view illustrating a food container placed on a cooking plate of a cooking apparatus according to an embodiment. FIG. 5 is a view illustrating lighting in a lighting portion of a cooking plate when a food container is placed on the cooking plate of a cooking apparatus according to an embodiment. FIG. 6 is a cross-sectional view of a cooking plate according to an embodiment.

The cooking apparatus 1 may inductively heat the food container C when the food container C is placed anywhere on the first region 101 of the cooking plate 100 as shown in FIG. 4.

Because a plurality of induction heaters 20 are arranged over an entire area of the first region 101, no matter where the food container C is placed on the first region 101, at least one induction heater 20 corresponding to a position of the food container C may be driven to inductively heat the food container C.

The controller 240 may drive the at least one induction heater 20 located at the position corresponding to the food container C based on position information of the food container C collected from the container detector 220.

Based on the position information of the food container C collected by the container detector 220, the controller 240 may control the backlight unit 70 to drive an LED 71 which is the closest to the position of the food container C as shown in FIG. 5, and to allow the light emitted from the LED 71 to pass through a lighting portion 104a disposed at a position corresponding to the position of the LED 71 which is the closest to the food container C.

In an example, based on the position information of the food container C collected by the container detector 220, the controller 240 may control the backlight unit 70 to allow at least one of the plurality of LEDs 71 to emit light, and the light may be emitted or transmitted from at least one lighting portion 104 disposed at the position corresponding to the at least one light-emitting LED 71, thereby forming lighting of the cooking plate 100. In an example, the lighting portion 104a through which light is transmitted due to the placement of the food container C on the cooking plate 100 may be defined as the lighting portion 104a corresponding to the LED 71 located the closest to the food container C in an induction heating zone H formed by driving the induction heaters 20 among the entire lighting portion 104. Hereinafter, the lighting portion 104a is referred to as the adjacent lighting portion 104a.

In an example, a position of the adjacent light portion 104a may change depending on a position of the food container C, because a user may place the food container C in various positions on the cooking plate 100.

In an example, the adjacent lighting portion 104a that displays light due to the placement of the food container C on the cooking plate 100 may be single or plural.

In an example, an LED 71 corresponding to a lighting portion 104b disposed within the induction heating zone H formed by driving the induction heaters 20 may not be driven. In an example, when a user places the food container C on the cooking plate 100, at least one lighting portion 104b of the entire lighting portion 104 may be located to correspond the food container C in a vertical direction. Hereinafter, the lighting portion 104b is referred to as the inner lighting portion 104b.

In an example, a position of the inner lighting portion 104b may change depending on a position of the food container C because a user places the food container C in various positions on the cooking plate 100.

Because heat generated by the food container C in the induction heating zone H is conducted and transferred to the inner lighting portion 104b, located in the induction heating zone H, and at least one LED 71 corresponding to the inner lighting portion 104b, the LED 71 may be damaged by the heat when the LED 71 is driven. To prevent the above, a printing layer 130, a color filter layer 140, and the at least one LED 71 corresponding to the inner lighting portion 104b in a vertical direction may include a heat-resistant material having a heat resistance temperature of approximately 500°C or more.

The cooking plate 100 may be made of a single piece of ceramic glass. Because the cooking plate 100 is made of a single piece of glass, the aesthetics of the cooking apparatus 1 may be improved.

In an example, the lighting portion 104 may be provided in the same or approximately similar color as the first region 101 and the second region 102.

No light emitted from the LED 71 may be transmitted in the first region 101 or the second region 102 other than the through the lighting portion 104 and the display portion 103. The light emitted from the LED 71 may be blocked by the printing layer 130, which will be described later.

The light emitted from the LED 71 may be transmitted from (i.e., passed through) the lighting portion 104, thereby allowing a color of the light from the LED 71 to be displayed on the cooking plate 100. The lighting portion 104 may allow the light emitted from the LED 71 to be transmitted through the color filter layer 140 to be described later, and when no light is emitted from the LED 71, a color of the lighting portion 104 may be the same or similar to a color of the first region 101 or the second region 102.

The display portion 103 may allow an image displayed on the display panel 31 to be displayed on the cooking plate 100. In an example, the display portion 103 may be configured to allow a transmittance of the luminosity of the image displayed on the display panel 31 to be approximately 80% to 90% in the display portion 103.

In an example, a color of the display panel 31 when the display panel 31 is not driven may be the same or similar to the color of the first region 101 or the second region 102. Even when the display panel 31 is not driven, the display panel 31 may be visible on the cooking plate 100 via the display portion 103.

In an example, when the display panel 31 and the LED 71 are not driven, the color of the display portion 103 and the lighting portion 104 may be the same or similar to the color of the first region 101 or the second region 102 as described above. Accordingly, the aesthetics of the cooking plate 100 may be improved.

Because the food container C may be placed at any position on the first region 101 of the cooking plate 100, the cooking plate 100 may have an increased number of contacts with the food container C. That is, as a user may place the food container C more freely compared to when the food container C is placed at a specified position, the cooking plate 100 may be in contact with the food container C at various locations on the first region 101 of the cooking plate 100.

As the number of contacts between the cooking plate 100 and the food container C increases, damage to the cooking plate 100, such as scratches on the cooking plate 100, may occur.

In an example, to prevent the above, the cooking plate 100 may include a bump layer 120 in which a plurality of bumps are formed on an upper surface of the cooking plate 100, as shown in FIG. 6.

The cooking plate 100 may include a glass body 110 made of ceramic glass. The bump layer 120 may be disposed on an upper surface of the glass body 110.

In an example, the glass body 110 may be made of transparent ceramic glass.

In an example, the bump layer 120 may be formed on the upper surface of the glass body 110 through a physical and/or chemical process. In an example, the bump layer 120 may be provided on the upper surface of the glass body 110 by a blasting process. In an example, the bump layer 120 may be formed by physical and/or chemical polishing after the blasting process.

In an example, a width W between the plurality of bumps in the bump layer 120 may each be approximately 50 to 150 µm.

In an example, a depth d of the plurality of bumps may each be 1 to 50 µm.

In order to minimize a breakage of the cooking plate 100 upon contact with the food container C, the width W and the depth d of each of the plurality of bumps may be determined to ensure a rigidity of the cooking plate 100 within a predetermined range.

In an example, the bump layer 120 may be formed on the upper surface of the glass body 110 over the entire area of the cooking plate 100 except for the display portion 103.

When light is transmitted through the bump layer 120, the light may be diffusely reflected by the plurality of bumps in the bump layer 120 and may pass through the bump layer 120.

Accordingly, when the image displayed on the display panel 31 is transmitted from the bump layer 120, a visibility of the image may be reduced. To prevent the above, in the cooking plate 100, the bump layer 120 is not disposed on the display portion 103 that corresponds the display panel 31, thereby increasing the visibility of the image displayed on the display portion 103.

In an example, in the cooking plate 100, the bump layer 120 may be formed on the lighting portion 104. When light emitted from the LED 71 is transmitted through the lighting portion 104, colors may be displayed on the cooking plate 100, and in this instance, the colors displayed via the lighting portion 104 may be blurred by the plurality of bumps of the bump layer 120 formed on the lighting portion 104, thereby improving aesthetics.

In an example, the image displayed on the display panel 31 may be displayed on the cooking plate 100 by passing through only the glass body 110 without passing through the bump layer 120.

In an example, the light from the LED 71 may be displayed on the cooking plate 100 by sequentially passing through the glass body 110 and the bump layer 120.

The cooking plate 100 may include the printing layer 130 that forms the display portion 103 and the lighting portion 104 and forms a color of the cooking plate 100.

In an example, the printing layer 130 may be printed on a lower surface of the cooking plate 100. In an example, the printing layer 130 may also be provided by attaching a pre-printed layer to the lower surface of the cooking plate 100.

The printing layer 130 may include a printing surface 133 that is not light-transmissive (i.e., is opaque) and is provided in a specific color. The printing surface 133 may be provided as a region on which a colored substance, such as ink, is printed.

The printing layer 130 may include a hole 131 that is disposed to correspond to the lighting portion 104 in a vertical direction to allow the light emitted from the LED 71 to pass through to and irradiate the lighting portion 104.

In an example, a plurality of holes 131 may be provided. In an example, the number of holes 131 may be provided to correspond to the number of lighting portions 104.

The hole 131 may be provided as a region on which no colored material, such as ink, is printed in the printing layer 130.

The printing layer 130 may include a display hole 132 that is disposed to correspond to the display portion 103 in a vertical direction to allow an image displayed on the display panel 31 to pass through and be displayed on the display portion 103.

In an example, the display hole 132 may correspond to the display portion 103 thereon and the display panel 31 thereunder.

The display hole 132 may be provided as a region on which no colored material, such as ink, is printed in the printing layer 130.

In an example, a color of the printing layer 130 may be displayed on a surface of the cooking plate 100 except for the display portion 103 and the lighting portion 104. In an example, an overall color of the cooking plate 100 may be determined by the color of the printing layer 130.

In an example, the printing layer 130 may be made of a printing material having high heat resistance, because high temperature heat may be transferred to the printing layer 130 as heat from self-heating of the induction heater 20 or the heating of the food container C is conducted. In particular, because the aesthetics of the cooking plate 100 may be reduced when a color change of the printing layer 130 occurs due to thermal deformation, a printing material forming the printing layer 130 may have a heat resistance temperature equal to or greater than a predetermined temperature.

In an example, the printing material forming the printing layer 130 may include a heat-resistant material having a heat resistance temperature of approximately 500°C or more.

The cooking plate 100 may include the color filter layer 140 that is disposed to correspond to the holes 131 in a vertical direction. The color filter layer 140 may be disposed on a lower surface of the printing layer 130. In an example, the color filter layer 140 may be printed on the lower surface of the printing layer 130. In an example, the color filter layer 140 may also be provided by attaching a pre-printed layer to the lower surface of the printing layer 130.

In an example, the color filter layer 140 may be provided with an area corresponding to the hole 131 or an area larger than a total area of the hole 131.

In an example, a plurality of holes 131 may be provided, and the color filter layer 140 may be provided as a single layer covering the entire area of the plurality of holes 131 to correspond to the entire plurality of holes 131 in a vertical direction.

In an example, a plurality of holes 131 may be provided, and the number of color filter layers 140 may be provided to correspond to the number of holes 131.

The color filter layer 140 may allow the light emitted from the LED 71 to pass through to the hole 131.

The color filter layer 140 may allow a color of the light emitted from the LED 71 to be partially corrected and displayed on the lighting portion 104 of the cooking plate 100 through the hole 131.

In an example, a color of the color filter layer 140 when no light is emitted from the LED 71 may be approximately the same or similar to the color of the printing layer 130.

In an example, when no light is emitted from the LED 71, the color of the color filter layer 140 may be displayed on the lighting portion 104, because a color difference between the lighting portion 104 and a region other than the lighting portion 104 on the cooking plate 100 may reduce aesthetics.

In an example, a color of the display panel 31 when the display panel 31 is not driven may be approximately the same or similar to the color of the printing layer 130.

In an example, when the display panel 31 is not driven, the color of the display panel 31 may be displayed on the display portion 103, because a color difference between the display portion 103 and a region other than the display portion 103 on the cooking plate 100 may reduce aesthetics.

In an example, the color of the display panel 31 when the display panel 31 is not driven may be approximately the same or similar to the color of the color filter layer 140 when no light is emitted from the LED 71.

In an example, a color difference among the display portion 103, the lighting portion 104, and a region other than the display portion 103 and the lighting portion 104 on the cooking plate 100 may reduce aesthetics.

In an example, the color filter layer 140 may be made of a heat-resistant printing material, because high temperature heat may be transferred to the color filter layer 140 as heat from self-heating of the induction heater 20 or the heating of the food container C is conducted.

In particular, as shown in FIG. 5, the color filter layer 140 corresponding to the lighting portion 104b disposed in the induction heating zone H formed by driving the induction heater 20 in the color filter 140 may be thermally deformed by conducting high temperature heat due to heating of the food container C.

When the color filter layer 140 is thermally deformed, a color change may occur, resulting in a color difference from the printing layer 130, which may reduce aesthetics. Also, optical properties of the color filter layer 140 may be changed due to thermal deformation, resulting in a change in transmittance or a color difference in the transmitted light.

To prevent the above, the color filter layer 140 may have a heat resistance temperature equal to or greater than a predetermined temperature. For example, the color filter layer 140 may include a heat-resistant material having a heat resistance temperature of 500°C or more.

In an example, the color filter layer 140 may be formed of a silicon material, and a heat resistance of the color filter layer 140 may be increased by combining additives such as copper and chromium. In an example, the color filter layer 140 may have a heat resistance with a heat resistance temperature of 500°C or higher through a combination of copper and chromium.

In an example, when a user places the food container C anywhere on the first region 101, at least one induction heater 20 corresponding to the food container C in a vertical direction may be driven, and thus, the induction heating zone H may be formed anywhere on the first region 101. Accordingly, at least one of the plurality of lighting portions 104 disposed on the first region 101 may be disposed inside the induction heating zone H.

Accordingly, the entire area of the color filter layer 140 corresponding to the plurality of lighting portions 104 may include a heat-resistant material having a heat resistance temperature of 500°C or higher.

The cooking plate 100 may include the heat-resistant layer 150 disposed on a lower surface of the color filter layer 140 to cover the color filter layer 140.

In an example, the heat-resistant layer 150 may be printed on the lower surface of the color filter layer 140. In an example, the heat-resistant layer 150 may also be provided by attaching a pre-printed layer to the lower surface of the color filter layer 140.

The heat-resistant layer 150 may cover the color filter layer 140 to increase the heat resistance of the color filter layer 140.

Hereinafter, a manufacturing process of the cooking plate 100 is described in detail.

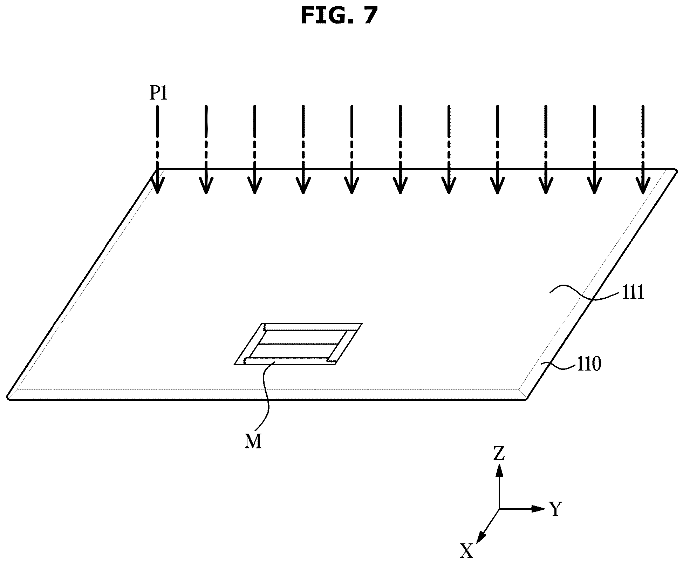

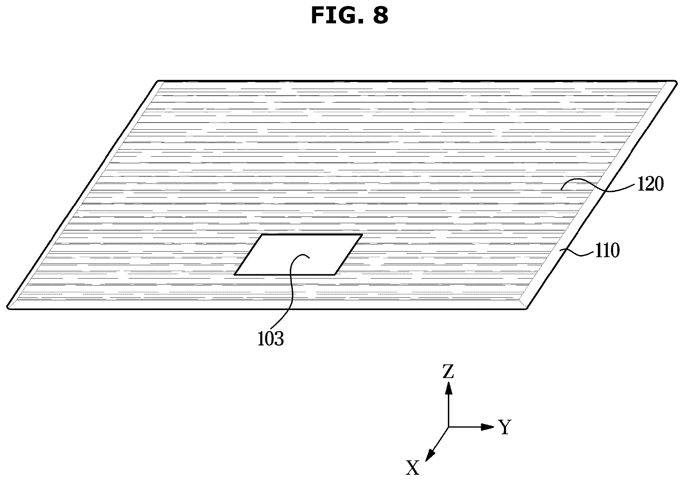

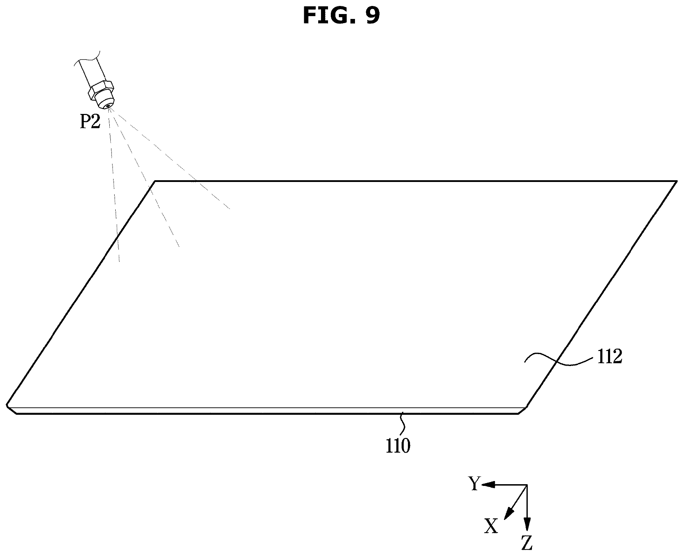

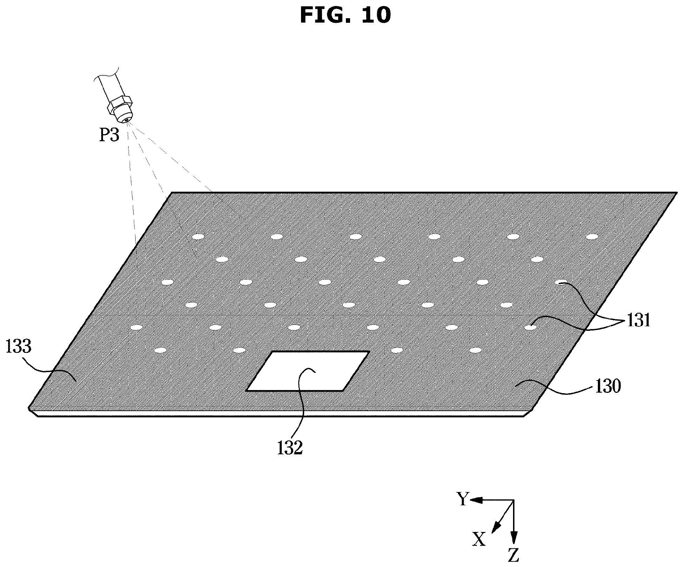

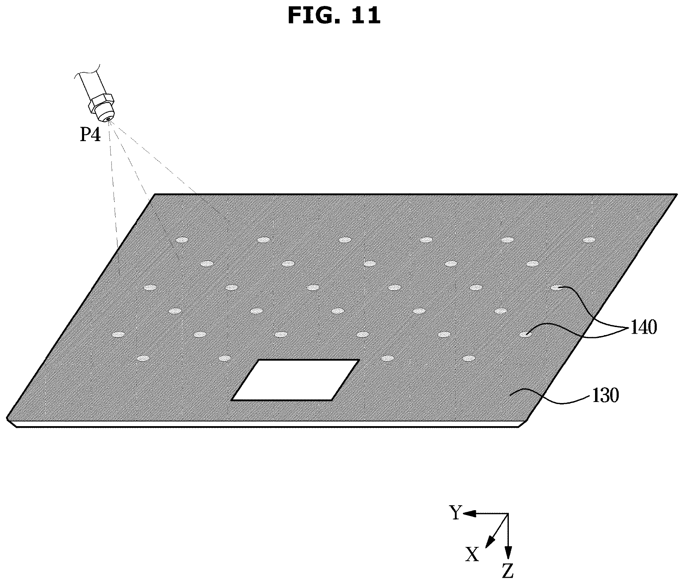

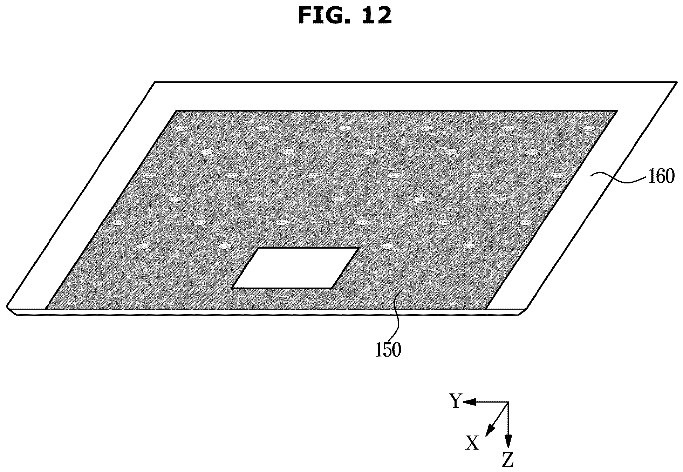

FIG. 6 is a cross-sectional view of a cooking plate according to an embodiment. FIG. 7 is a view illustrating a manufacturing process of a cooking plate according to an embodiment. FIG. 8 is a view illustrating a manufacturing process of a cooking plate according to an embodiment. FIG. 9 is a view illustrating a manufacturing process of a cooking plate according to an embodiment. FIG. 10 is a view illustrating a manufacturing process of a cooking plate according to an embodiment. FIG. 11 is a view illustrating a manufacturing process of a cooking plate according to an embodiment. FIG. 12 is a view illustrating a manufacturing process of a cooking plate according to an embodiment.

As shown in FIG. 7, the glass body 110 may be prepared, and at least a portion of an upper surface 111 of the glass body 110 may be masked M. The masked region M is a region where the display portion 103 is formed to prevent bumps from being formed in the region corresponding to the display portion 103 by an bump layer formation process P1.

In an example, a physical and/or chemical process as the bump layer formation process P1 may be performed on the upper surface 111 of the glass body 110 in a state where the display portion 103 is masked. In an example, in the bump layer formation process P1, particles may be extruded through a blasting process, the upper surface 111 may be hit, and then an etching process and physical and/or chemical polishing may be performed.

Thereafter, as shown in FIG. 8, the bump layer 120 may be formed on the glass body 110, and the display portion 103 in which the bump layer 120 is not disposed may be formed in the region where the masking M is removed.

Thereafter, as shown in FIG. 9, a printing layer formation process P2 may be performed on a lower surface 112 of the glass body 110.

A printing process may be performed on the lower surface 112 of the glass body 110 to form the printing layer 130.

In the printing layer 130, the display hole 132 may be formed in a region corresponding to the display portion 103, and a plurality of holes 131 may be formed on the first region 101.

Thereafter, as shown in FIG. 10, a color filter layer formation process P3 may be performed on a lower surface of the printing layer 130.

A printing process may be performed on the lower surface of the printing layer 130 to form the color filter layer 140.

In an example, the color filter layer 140 may be provided as a single region by applying a color filter to an area corresponding to all of the plurality of holes 131.

In an example, the color filter layer 140 may be provided as a plurality of regions by applying a color filter to the regions corresponding to the plurality of holes 131.

Thereafter, as shown in FIG. 11, a heat-resistant layer formation process P4 may be performed on a lower surface of the color filter layer 140.

In an example, a printing process may be performed on the lower surface of the color filter layer 140 to form the heat-resistant layer 150.

In an example, the heat-resistant layer 150 may be printed on the lower surface of the color filter layer 140 to cover the entire lower surface of the color filter layer 140.

In an example, the heat-resistant layer 150 may be printed to cover the entire lower surface 112 of the glass body 110.

Thereafter, as shown in FIG. 12, a connection layer 160 in contact with the bracket 15 of the housing 10 (see FIG. 2) may be bonded to an edge of the heat-resistant layer 150.

In an example, the bracket 15 may contact the lower surface of the cooking plate 100 and may be screwed, or the like, to be coupled to the housing 10 in order to couple the cooking plate 100 to the housing 10.

In an example, the bracket 15 may be bonded to the lower surface of the cooking plate 100 with an adhesive. In this instance, the lower surface of the cooking plate 100 may be provided as the heat-resistant layer 150 or the printing layer 130, and the bracket 15 may be bonded to the heat-resistant layer 150 or the printing layer 130. When the heat from the induction heater 20 or the heat generated in the food container C is transferred throughout the cooking plate 100 due to operation of the induction heater 20, the adhesive may be thermally deformed, and the thermally deformed adhesive may chemically interact with the inside of the printing layer 130 or the heat-resistant layer 150. As a result, a color change of the printing layer 130 may occur, reducing aesthetics.

To prevent the above, the connection layer 160 may be disposed in the region where the bracket 15 and the cooking plate 100 are bonded, and the connection layer 160 may prevent the thermally deformed adhesive from penetrating the connection layer 160 and contacting the printing layer 130.

Hereinafter, an embodiment of lighting in the lighting portion 104 when the food container C is placed on the cooking plate 100 is described in detail.

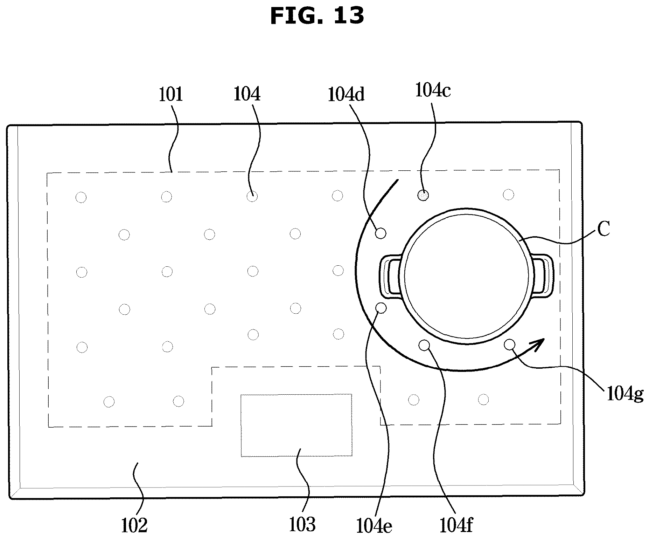

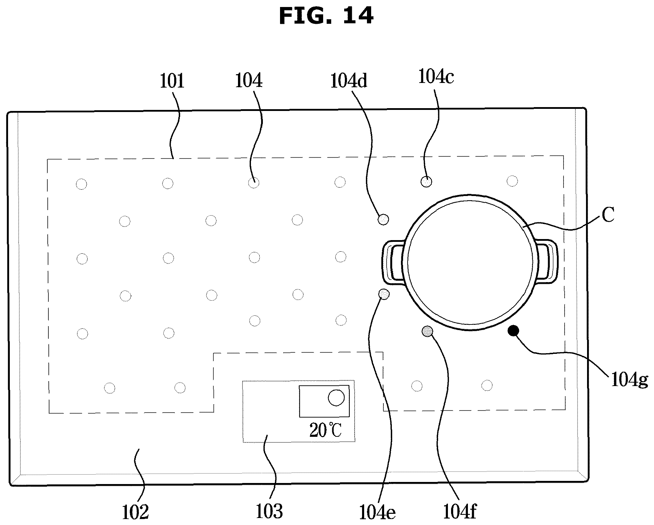

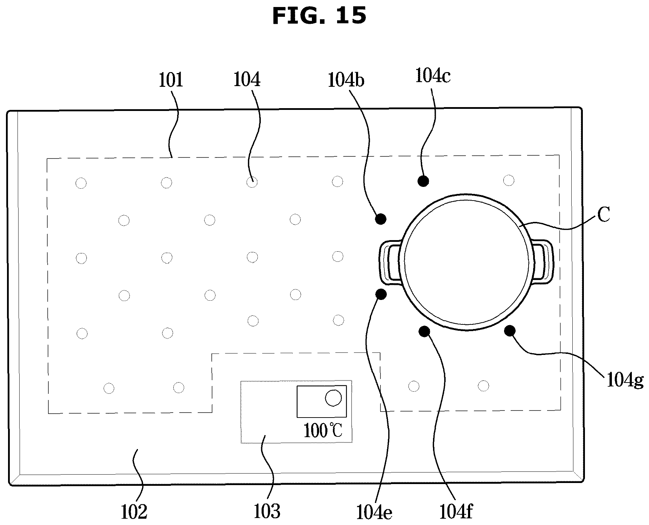

FIG. 13 is a view illustrating lighting in a lighting portion when a food container is placed on a cooking plate according to an embodiment. FIG. 14 is a view illustrating lighting in the lighting portion after FIG. 13. FIG. 15 is a view illustrating lighting in the lighting portion after FIG. 14.

In an example, the controller 240 may control the backlight unit 70 to allow at least one of the plurality of LEDs 71 to emit light based on position information of the food container C obtained from the container detector 220, and may form lighting of the cooking plate 100 by light transmitted from at least one of adjacent lighting portions 104c, 104d, 104e, 104f, and 104g at a position corresponding to the at least one light-emitting LED 71.

Hereinafter, for convenience of description, among the adjacent lighting portions 104c, 104d, 104e, 104f, and 104g, an uppermost positioned adjacent lighting portion based on FIG. 13 is referred to as the first adjacent lighting portion 104c, and sequentially in a downward direction based on FIG. 13, the other adjacent lighting portions are referred to as the second adjacent lighting portion 104d, the third adjacent lighting portion 104e, the fourth adjacent lighting portion 104f, and the fifth adjacent lighting portion 104g. However, the disclosure is not limited thereto, and the order of the first to fifth adjacent lighting portions 104c, 104d, 104e, 104f, and 104g may be changed, and adjacent lighting portions may also correspond to the first to fifth adjacent lighting portions 104c, 104d, 104e, 104f, and 104g.

In an example, the backlight unit 70 may control the plurality of LEDs 71 disposed at positions corresponding to each of the first to fifth adjacent lighting portions 104c, 104d, 104e, 104f, and 104g, and may also control turn-on/turn-off, operation time and duration of the plurality of LEDs 71, color of the light emitted by the plurality of LEDs 71, and the like.

In an example, when the food container C is placed on the cooking plate 100, light may be transmitted from all of the adjacent lighting portions adjacent to the cooking plate 100.

In an example, when the food container C is placed on the cooking plate 100, light may be transmitted from any one 104c, 104d, 104e, 104f, or 104g from among all the adjacent lighting portions adjacent to the cooking plate 100.

In an example, when the food container C is placed on the cooking plate 100, light may be transmitted from any one or four or less of the adjacent lighting portions 104c, 104d, 104e, 104f, and 104g.

In an example, the controller 240 may control the backlight unit 70 to allow light to be transmitted sequentially from each of the adjacent lighting portions 104c, 104d, 104e, 104f, and 104g, i.e., from the first adjacent lighting portion 104c to the fifth adjacent lighting portion 104g, in order to improve aesthetics.

In an example, as shown in FIG. 13, when the food container C is placed on the cooking plate 100, the backlight unit 70 may be driven to allow light to be transmitted from the first adjacent lighting portion 104c first. The backlight unit 70 may then be driven to allow light to be sequentially transmitted from the second adjacent lighting portion 104d to the fifth adjacent lighting portion 104g.

In an example, the backlight unit 70 may be driven to allow light to be transmitted from the fifth adjacent lighting portion 104g first, and then the backlight unit 70 may be driven to allow light to be sequentially transmitted from the fourth adjacent lighting portion 104f to the first adjacent lighting portion 104c.

In an example, as shown in FIG. 14, the backlight unit 70 may be driven to allow light of the same color to be sequentially transmitted from the first to the fifth adjacent lighting portions 104c, 104d, 104e, 104f, and 104g in different brightness.

In an example, the backlight unit 70 may allow the plurality of LEDs 71 corresponding to each of the first to fifth adjacent lighting portions 104c, 104d, 104e, 104f, and 104g to emit light of the same color, but with different outputs.

In an example, the backlight unit 70 may allow the amount of light transmitted from the fifth adjacent lighting portion 104g to be greater than the amount of light transmitted from the first adjacent lighting portion 104c, and to allow the amount of transmitted light to be sequentially reduced from the fourth adjacent lighting portion 104f to the second adjacent lighting portion 104d.

Conversely, the backlight unit 70 may allow the amount of light transmitted from the fifth adjacent lighting portion 104g to be less than the amount of light transmitted from the first adjacent lighting portion 104c, and to allow the amount of transmitted light to be sequentially increased from the fourth adjacent lighting portion 104f to the second adjacent lighting portion 104d.

In an example, the controller 240 may control the backlight unit 70 based on information transmitted from the container detector 220, and may control the display panel 31 to display information about the food container C.

In an example, the controller 240 may control the display panel 31 to display the information about the food container C based on the information transmitted from the container detector 220, and then may control the backlight unit 70 to allow light to be transmitted from the adjacent lighting portions 104c, 104d, 104e, 104f, and 104g.

In an example, information such as a position of the food container C on the cooking plate 100, a temperature transmitted to the food container C based on information transmitted from the temperature detector 230, and the like, may be displayed on the display panel 31.

In an example, the backlight unit 70 may be driven to allow different colors of light to be transmitted from each of the first to fifth adjacent lighting portions 104c, 104d, 104e, 104f, and 104g.

In an example, the backlight unit 70 may allow the plurality of LEDs 71 corresponding to each of the first to fifth adjacent lighting portions 104c, 104d, 104e, 104f, and 104g to emit different colors of light.

In an example, as shown in FIG. 15, based on information transmitted from the temperature detector 230, when the temperature transmitted to the food container C becomes higher than a predetermined temperature, the controller 240 may control the backlight unit 70 to allow the amount of light transmitted from the first to the fifth adjacent lighting portions 104c, 104d, 104e, 104f, and 104g to change.

In an example, when the temperature of the food container C becomes higher than approximately 100°C at room temperature, the amount of light transmitted from the first to the fifth adjacent lighting portions 104c, 104d, 104e, 104f, and 104g may be changed by the backlight unit 70. Then, in an example, when the temperature of the food container C becomes higher than approximately 200°C, the amount of light transmitted from the first to the fifth adjacent lighting portions 104c, 104d, 104e, 104f, and 104g may be changed by the backlight unit 70.

In an example, as the temperature of the food container C increases, the backlight unit 70 may increase the amount of light transmitted from the first to fifth adjacent lighting portions 104c, 104d, 104e, 104f, and 104g.

In an example, as the temperature of the food container C increases, the backlight unit 70 may sequentially increase the amount of light transmitted from the first to fifth adjacent lighting portions 104c, 104d, 104e, 104f, and 104g.

In an example, as the temperature of the food container C increases, the backlight unit 70 may first increase the amount of light transmitted from the fourth adjacent light portion 104f, and as the temperature of the food container C increases further, the backlight unit 70 may increase the amount of light transmitted from the third adjacent light portion 104e.

In an example, as the temperature of the food container C increases, the backlight unit 70 may first increase the amount of light transmitted from the fourth adjacent lighting portion 104f to become equal to the amount of light transmitted from the fifth adjacent lighting portion 104g, and as the temperature of the food container C increases further, the backlight unit 70 may increase the amount of light transmitted from the third adjacent lighting portion 104e to become equal to the amount of light transmitted from the fifth adjacent lighting portion 104g. Accordingly, when the temperature of the food container C is increased above a predetermined temperature, the amount of light transmitted from the third to fifth adjacent lighting portions 104e, 104f and 104g may become equal to each other.

In an example, the amount of light transmitted from each of the first adjacent lighting portion 104c and the second adjacent lighting portion 104d may also change as described above, and when the temperature of the food container C further increases, the backlight unit 70 may change the amount of light transmitted from each of the first to fifth adjacent lighting portions 104c, 104d, 104e, 104f, and 104g to be equal, as shown in FIG. 15.

In an example, when the backlight unit 70 is configured to allow the plurality of LEDs 71 corresponding to each of the first to fifth adjacent lighting portions 104c, 104d, 104e, 104f, and 104g to emit different colors of light, as the temperature of the food container C increases, the backlight unit 70 may allow the color of the light transmitted from each of the first to fifth adjacent lighting portions 104c, 104d, 104e, 104f, and 104g to change.

In an example, as the temperature of the food container C increases, the backlight unit 70 may first allow a color of the light transmitted from the fourth adjacent lighting portion 104f to become the same as that of the light transmitted from the fifth adjacent lighting portion 104g, and as the temperature of the food container C increases further, the backlight unit 70 may allow a color of the light transmitted from the third adjacent lighting portion 104e to become the same as that of the light transmitted from the fifth adjacent lighting portion 104g. Accordingly, the color of the light transmitted from the third adjacent lighting portion to the fifth adjacent lighting portion 104e, 104f, and 104g may be the same.

In an example, the color of the light transmitted from each of the first adjacent lighting portion 104c and the second adjacent lighting portion 104d may also change as described above, and when the temperature of the food container C further increases, the backlight unit 70 may allow the color of the light transmitted from all of the first to fifth adjacent lighting portions 104c, 104d, 104e, 104f, and 104g to be the same.

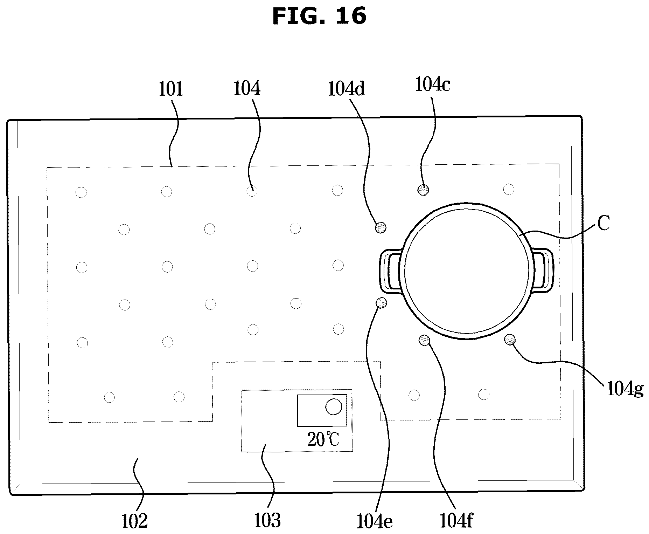

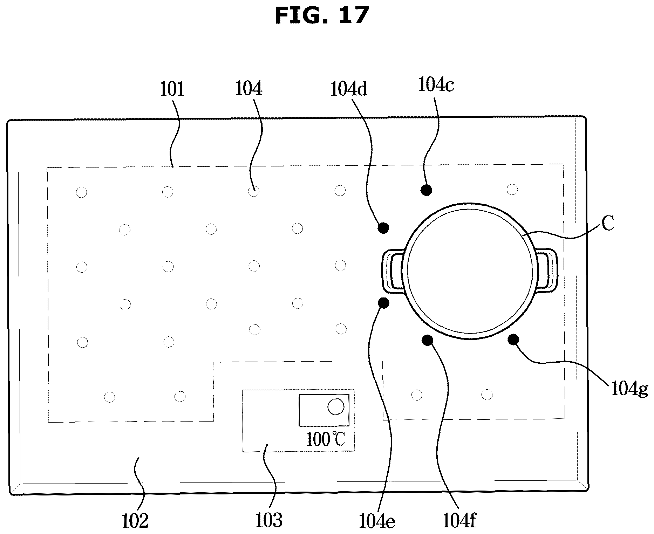

FIG. 16 is a view illustrating lighting in a lighting portion when a food container is placed on a cooking plate according to an embodiment. FIG. 17 is a view illustrating lighting in the lighting portion after FIG. 16.

In an example, as shown in FIG. 16, when a food container C is placed on the cooking plate 100, the controller 240 may control the backlight unit 70 to allow light to be simultaneously transmitted from the adjacent lighting portions 104c, 104d, 104e, 104f, and 104g which are adjacent to the food container C.

When a temperature of the food container C then increases, the controller 240 may control the backlight unit 70 to allow a color of the light transmitted from the adjacent lighting portions 104c, 104d, 104e, 104f, and 104g adjacent to the food container C to change, as shown in FIG. 17.

In an example, the backlight unit 70 may allow a color of light emitted from the plurality of LEDs 71 corresponding to each of the adjacent lighting portions 104c, 104d, 104e, 104f, and 104g to simultaneously change, such that the color of the light transmitted from the adjacent lighting portions 104c, 104d, 104e, 104f, and 104g is changed.

In an example, when a temperature of the food container C increases due to cooking, the controller 240 may control the backlight unit 70 to further increase the amount of light transmitted from the adjacent lighting portions 104c, 104d, 104e, 104f, and 104g adjacent to the food container C.

In an example, the backlight unit 70 may simultaneously change the amount of light emitted from the plurality of LEDs 71 corresponding to each of the adjacent lighting portions 104c, 104d, 104e, 104f, and 104g such that the amount of light transmitted from each of the adjacent lighting portions 104c, 104d, 104e, 104f, and 104g is changed.

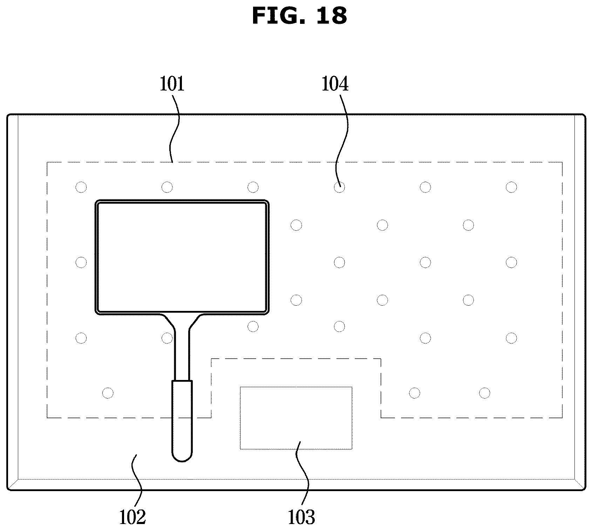

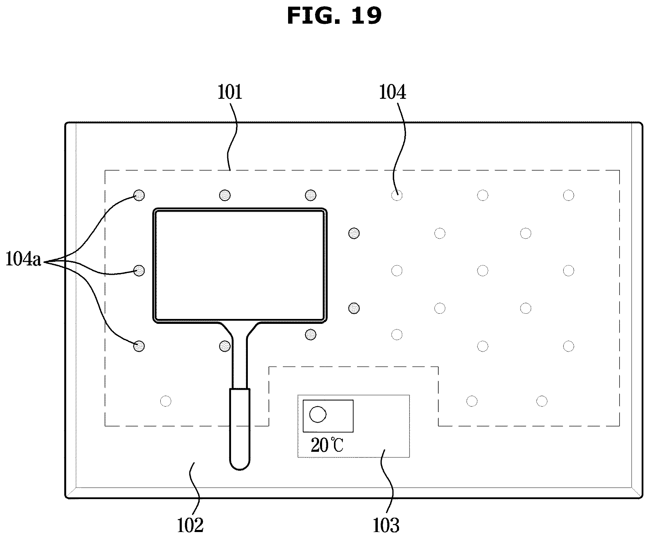

FIG. 18 is a view illustrating lighting in a lighting portion when a food container is placed on a cooking plate according to an embodiment. FIG. 19 is a view illustrating lighting in the lighting portion after FIG. 18.

The controller 240 may control the backlight unit 70 to allow light to be transmitted from the adjacent lighting portion 104 according to a shape of the cooking apparatus C, as shown in FIG. 18 and FIG. 19.

In an example, the cooking apparatus 1 may include a container shape detector. The container shape detector may detect a shape of a contact surface between a food container C placed on the cooking plate 100 and the cooking plate 100.

In an example, the container shape detector may include a container shape sensor for detecting the shape of the contact surface between the food container C and the cooking plate 100. The container shape detector may include a container shape detection circuit for processing an output of the container shape sensor and outputting information about the shape of the contact surface between the food container C and the cooking plate 100 to the controller 240.

The container shape sensor may be disposed adjacent to the induction heater 20 to detect the shape of the contact surface between the cooking plate 100 and the food container C placed over the induction heater 20. In an example, the container shape sensor may be disposed on the induction heater 20.

In an example, the container shape sensor may include a variety of sensors that may detect the contact surface between the food container C and the cooking plate 100, e.g., an infrared sensor, a weight sensor, a laser sensor, a lidar sensor.

Based on information received from the container shape detector, the controller 240 may control the backlight unit 70 to allow light to be transmitted from the adjacent lighting portions 104 that are located around the food container C according to the shape of the contact surface between the food container C and the cooking plate 100.

In an example, as shown in FIG. 19, in a case where a contact surface of the food container C has an approximately rectangular shape, the controller 240 may control the backlight unit 70 to form lighting in a rectangular shape around the food container C by the adjacent lighting portion 104a.

In an example, in a case where the contact surface of the food container C has an approximately rectangular shape as shown in FIG. 19, the controller 240 may control the backlight unit 70 to form lighting in a portion of the rectangular shape around the food container C by the adjacent lighting portion 104a. For example, the backlight unit 70 may be driven to form lighting with two or three lines rather than the rectangular shape.

In an example, as shown in FIG. 13, in a case where the contact surface of the food container C has an approximately circular shape, the controller 240 may control the backlight unit 70 to form lighting in a circular shape around the food container C by the adjacent lighting portions 104a. In an example, the backlight unit 70 may be driven to form lighting in an arc shape. According to an embodiment, a cooking apparatus may include a cooking plate 100, at least one induction heater 20 configured to generate a magnetic field and be disposed below the cooking plate, and a light source 71 configured to emit light to the cooking plate.

The cooking plate may include: a glass body 110, a printing layer 130 that includes a hole 131 formed to allow light emitted from the light source to be transmitted and is disposed on a lower surface of the glass body, and a color filter layer 140 disposed on a lower surface of the printing layer to correspond to the hole in a vertical direction.

The cooking plate may be divided into a first region 101 that corresponds to an entirety of the at least one induction heater, and a second region 102 located outside of the entirety of the at least one induction heater.

The color filter layer 140 may be located on the first region.

The cooking apparatus may include a display panel 31 configured to display a state of the cooking apparatus.

The printing layer may include a display hole 132 disposed on the second region to allow an image displayed on the display panel to be transmitted.

The first region and the second region may be divided on the glass body integrally formed.

The cooking plate may include an bump layer 120 formed on the glass body 110 and including a plurality of bumps.

The bump layer may be formed on a region that does not correspond to the display hole in the vertical direction.

The light emitted from the light source may sequentially transmit the color filter layer, the hole, and the bump layer so as to transmit the cooking plate.

The image displayed on the display panel may transmit the cooking plate through the display hole.

The cooking plate may include a heat-resistant layer 150 formed on a lower surface of the color filter layer.

The cooking apparatus may include: a housing 10 configured to accommodate the induction heater and the light source, and a bracket 15 configured to couple the cooking plate to the housing.

The cooking plate may include a connection layer 160 disposed on a lower surface of the heat-resistant layer and formed to be connected to the bracket.

The color filter layer may be made of a heat-resistant material with a heat resistance temperature of 500°C or higher.

A width of each of the plurality of bumps may be 50 to 150 µm.

A depth of each of the plurality of bumps may be 1 to 50 µm.

The color filter layer may be provided in a color corresponding to a color of the printing layer.

When the display panel is not driven, a color of the display panel may be provided in a color corresponding to a color of the printing layer.

The glass body may be made of transparent ceramic glass.

The cooking plate may include a display portion which is a region that corresponds to the display hole in the vertical direction.

A transmittance of the image displayed on the display panel may be 80% to 90% in the display portion.

According to an embodiment, a cooking apparatus may include: a cooking plate 100; at least one induction heater 20 disposed below the cooking plate and configured to generate a magnetic field; a light source 71 configured to emit light to the cooking plate; and a display panel 31 configured to display an image on the cooking plate.

The cooking plate may include: a glass body 110, a printing layer 130 disposed on a lower surface of the glass body, and including a plurality of holes 131 that are formed to allow light emitted from the light source to be transmitted and are disposed to correspond to the at least one induction heater in a vertical direction, and a display hole 132 formed to allow the image displayed on the display panel to be transmitted, a display portion 103 formed on an upper surface of the glass body to correspond to the display hole in the vertical direction, an bump layer 120 formed on the upper surface of the glass body 110 and outside of the display portion and formed by a plurality of bumps, and a color filter layer 140 disposed on a lower surface of the printing layer to correspond to the plurality of holes in the vertical direction.

The light emitted from the light source may sequentially transmit the color filter layer, the hole, and the bump layer so as to transmit the cooking plate.

The image displayed on the display panel may sequentially transmit the display hole and the display portion so as to transmit the cooking plate.

The cooking plate may include a heat-resistant layer formed on a lower surface of the color filter layer.

The color filter layer may be made of a heat-resistant material with a heat resistance temperature of 500°C or higher.

According to an embodiment, a manufacturing method of a cooking apparatus may include: masking a display portion that is located on an upper surface of a glass body of a cooking plate to allow an image displayed on a display panel to be transmitted; forming an bump layer on the upper surface of the glass body; forming a printing layer on a lower surface of the glass body, the printing layer including a display hole that corresponds to the display portion and a hole formed to allow light emitted from a light source to be transmitted; forming a color filter layer on a lower surface of the printing layer and on a region that corresponds to the hole; and forming a heat-resistant layer on a lower surface of the color filter layer.

Although disclosure has been shown and described in relation to specific embodiments, it would be appreciated by those skilled in the art that changes and modifications may be made in these embodiments without departing from the principles and scope of the disclosure, the scope of which is defined in the claims and their equivalents.

## Claims

1. A cooking apparatus comprising:
a cooking plate;
at least one induction heater below the cooking plate and configured to generate a magnetic field; and
a light source configured to emit light,
wherein the cooking plate comprises:
a glass body;
a printing layer on a lower surface of the glass body, the printing layer comprising a hole configured to allow the light emitted from the light source to be transmitted through the hole, and
a color filter layer on a lower surface of the printing layer and corresponding to the hole in a vertical direction,
wherein the cooking plate is divided into a first region that corresponds to the at least one induction heater and a second region that does not correspond to the at least one induction heater, and
wherein the color filter layer is located in the first region.

2. The cooking apparatus of claim 1, further comprising:
a display panel configured to display a state of the cooking apparatus,
wherein the printing layer further comprises a display hole in the second region and configured to allow an image displayed on the display panel to be transmitted through the display hole, and
wherein the glass body comprises a single piece of glass which includes the first region and the second region.

3. The cooking apparatus of claim 2, wherein the cooking plate further comprises a bump layer on the glass body,
wherein the bump layer comprises a plurality of bumps, and
wherein the bump layer does not correspond to the display hole in the vertical direction.

4. The cooking apparatus of claim 3, wherein the light emitted from the light source sequentially passes through the color filter layer, the hole, and the bump layer.

5. The cooking apparatus of claim 3, wherein the image displayed on the display panel passes through the display hole.

6. The cooking apparatus of claim 1, wherein the cooking plate further comprises a heat-resistant layer on a lower surface of the color filter layer.

7. The cooking apparatus of claim 6, further comprising:
a housing configured to accommodate the at least one induction heater and the light source; and
a bracket coupling the cooking plate to the housing,
wherein the cooking plate further comprises a connection layer on a lower surface of the heat-resistant layer and connected to the bracket.

8. The cooking apparatus of claim 1, wherein the color filter layer comprises a heat-resistant material with a heat resistance temperature of at least 500°C.

9. The cooking apparatus of claim 3, wherein a width of each of the plurality of bumps is in a range of 50 µm to 150 µm.

10. The cooking apparatus of claim 3, wherein a depth of each of the plurality of bumps is in a range of 1 µm to 50 µm.

11. The cooking apparatus of claim 1, wherein a color of the color filter layer corresponds to a color of the printing layer.

12. The cooking apparatus of claim 2, wherein a color of the display panel corresponds to a color of the printing layer when the display panel is not driven.

13. The cooking apparatus of claim 1, wherein the glass body comprises transparent ceramic glass.

14. The cooking apparatus of claim 2, wherein the cooking plate further comprises a display portion comprising a region that corresponds to the display hole in the vertical direction, and
wherein a transmittance of the image displayed on the display panel through the display portion is 80% to 90% of a luminance output by the display panel.
